# EUROPEAN PATENT APPLICATION

(11) **EP 2 149 415 A1**
(43) Date of publication of application: **03.02.2010**
(21) Application number: 09425289.7
(22) Date of filing: 17.07.2009
(51) Int. Cl.: B22F 3/16, F16D 13/62, F16D 65/06, F16D 69/02

(54) **Process for manufacturing friction pads for brakes, particularly for railway vehicles**

(30) Priority: 21.07.2008 IT RM20080391
(71) Applicant: Cofren S.r.L., 83100 Avellino (IT)
(72) Inventor: De Soccio, Vittorio , Cofren S.r.l., 83100 Avellino (IT)
(74) Representative: Iannone, Carlo Luigi

(57) **Abstract**

The invention relates to a process for manufacturing friction pads for brakes, particularly for railway vehicles, comprising the steps of a) cold pressing raw material until making it manageable, and b) subjecting the same to sintering, said process being characterized by a further step c) of calibration by cold pressure of the braking element obtained by steps a) and b).

## Description

The present invention relates to a process for manufacturing friction pads for brakes, particularly for railway vehicles.

More specifically, the invention concerns new process permitting obtaining friction elements with optimum structural and functional features.

As it is well known, at present, when manufacturing friction elements comprised of synthesized material, it is first carried out a first cold pressing of material, so as to make it handeable, followed by a syntherization step.

Then, in case it is necessary sizing the friction element (e.g. in order to obtain the suitable thickness) a finishing operation of the product is carried out. Obviously, this operation does not permit acting on the mechanical features of the product, but only of the geometric features of the same.

On the basis of a specific experience maturate during the years in the specific field, the Applicant has now surprisingly found that, carrying out a further cold pressing step after the syntherization of the braking element, a final product is obtained having the optimum features both under the structural and functional point of view.

Therefore, the invention provides, in a process for manufacturing friction pads for brakes, particularly for railway vehicles, comprising the steps of a) cold pressing raw material until making it manageable, and b) subjecting the same to sintering, said process being characterized by a further step c) of calibration by cold pressure of the braking element obtained by steps a) and b).

Preferably, according to the invention, said further step c) of cold pressure is carried out in order to obtain a reduction of thickness of the braking element from step b) between 2% and 30% of the original thickness.

Still according to the invention, said step c) of further cold pressure is carried out applying a pressure within the range between 150 kg/cm² and 6000 kg/cm².

Always according to the invention, calibration obtained by said step c) is obtained by a stop of the press stroke.

The invention further relates to a product obtained by the process as described and claimed.

The present invention will be now described, for illustrative but not limitative purposes, according to its preferred embodiments, with particular reference to the figure of the enclosed drawings, wherein
Figure 1 is a section view of a first braking element after the cold pressing and syntherization steps;
Figure 2 is a section view of element of figure 1 after having subjected the same to the process according to the invention;
Figure 3 is a section view of a second braking after the cold pressing and syntherization steps;
Figure 4 is a section view of element of figure 3 after having subjected the same to the process according to the invention; and
Figures 5 and 6 show braking graphs respectively of a braking element realised by the inventive process and by the known process.

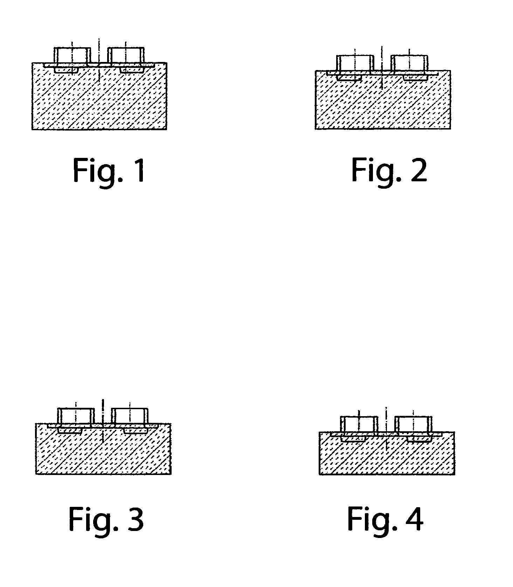

Observing now figures 1 - 2 and 3 - 4 of the enclosed drawings, it is noted that a braking element 1 (figures 1 and 3) subjected to pressing and syntherization, if subjected to calibration by the process according to the invention (figures 2 and 4), it is subjected to a reduction of thickness (and consequently of the structure) that will be decided on the basis of the different needing. Obviously, the sole limit of application of the solution according to the invention is the material comprimibility limit.

Under a practical point of view, solution suggested according to the present invention permits obtaining remarkable advantages with respect to known solutions.

First of all, advantages are obtained as far as the product handeability is concerned. In fact, calibration step introduced according to the invention gives to the product, after the syntherization step, a sufficient rigidity for handling the same during manufacturing of synthesised pads in order to prevent breaking during the following riveting operation (which is not part of the invention).

Furthermore, advantages under the environmental point of view are obtained, since, avoiding finishing operation in order to obtain correct height of the final product, no generation of noxious and polluting dust and waste materials occurs.

A further advantage, particularly with respect to the finishing step, is obtained with respect to the complete lack of surface contamination of the braking element, since no abrasive material is employed that leave residuals on the friction element surface.

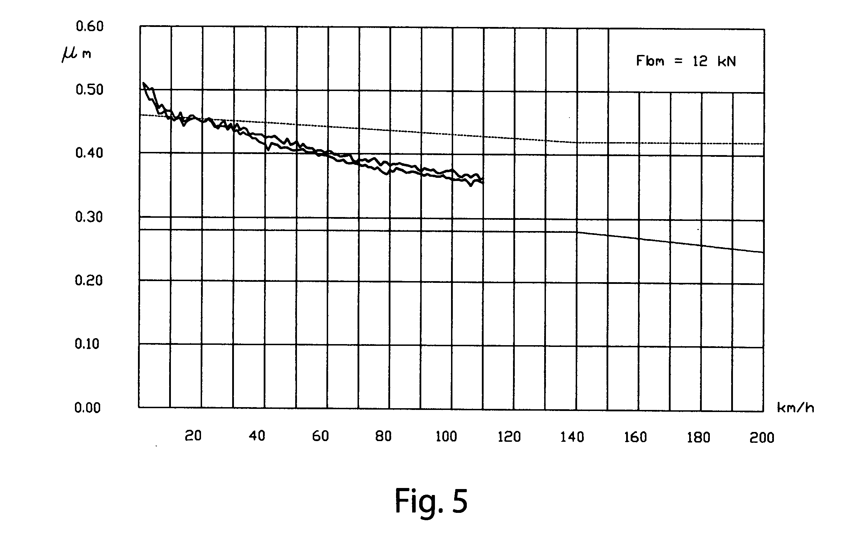

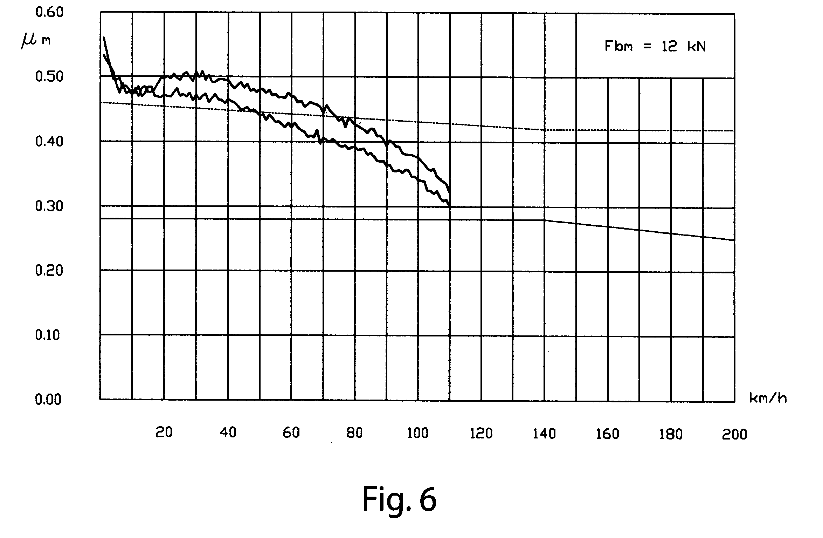

Finally, it must be observed that, as already put into evidence examining enclosed graphs of figures 5 and 6, noticeable advantages are obtained under the performances point of view. A final product is obtained with e better stability both for instantaneous and medium friction, with different pressures. This effect is due to the fact that, in the instantaneous friction step, calibrated material has a better thermal stability as far as linear expansion is concerned, under the effect of force and temperature it deforms (compression) more that the calibrated material according to the invention, and this phenomenon modifies effect of the application force during braking, causing variations of the instantaneous friction coefficient.

As to the medium friction, with different application forces, it is possible making the same remarks. In fact, with different pressures, material not calibrated according to the invention deforms more or less due to the high or low application forces, while material calibrated according to the invention (see figure 5) is more stable with respect to the not calibrated material according to the invention (figure 6)

Tests have been carried out on braking elements using the following materials (trade names of the material will be used in the following):
SP 134/201
T30S
SP201/320SI

Tests have been carried out applying pressure forces indicated in the table, thus obtaining percentages of variation of height indicated in the same table. Results listed in the table are valid for all three materials subjected to a test.

**TABLE I**

| Application Force Kg/cm² | % of height variation (with respect to the starting height) |
|---|---|
| 600 | 10.5 |
| 1200 | 15.5 |
| 1500 | 15.5 |
| 1800 | 21 |
| 2000 | 21 |
| 2100 | 21 |
| 2300 | 22 |
| 2500 | 22 |
| 2800 | 22 |
| 3000 | 22.5 |

It must e taken into consideration that beyond 2000 kg it is approached the incomprimibility threshold of materials, with small or even negligible variations with respect to the starting height.

Tests correlate specific pressure with variation of height of the braking element.

As already said, dimensional variation can be determined, regardless the pressure, providing a mechanical stop under the press mould, so as to reach the wished height even applying all the available pressure.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Process for manufacturing friction pads for brakes, particularly for railway vehicles, comprising the steps of a) cold pressing raw material until making it manageable, and b) subjecting the same to sintering, said process being **characterized by** a further step c) of calibration by cold pressure of the braking element obtained by steps a) and b).

2. Process according to claim 1, **characterized in that** said further step c) of cold pressure is carried out in order to obtain a reduction of thickness of the braking element from step b) between 2% and 30% of the original thickness.

3. Process according to one of the preceding claims, **characterized in that** said step c) of further cold pressure is carried out applying a pressure within the range between 150 kg/cm² and 6000 kg/cm²_{.}

4. Process according to one of the preceding claims, **characterized in that** calibration obtained by said step c) is obtained by a stop of the press stroke.

5. Product obtained by the process according to one of the claims 1 - 4
